# EUROPEAN PATENT APPLICATION

(11) **EP 0 905 187 A1**
(43) Date of publication of application: **31.03.1999**
(21) Application number: 97925283.0
(22) Date of filing: 05.06.1997
(51) Int. Cl.: C08L 21/00, C08L 23/16, C08L 23/20, C08L 23/28, C08K 5/103, B65H 5/06, B65H 3/06

(54) **MEDIUM-CONVEYING MEMBER**

(30) Priority: 05.06.1996 JP 166901/96
(71) Applicant: OMRON CORPORATION, Kyoto-shi, Kyoto 616 (JP)
(72) Inventor: OMATA, Nobuaki, Omron Corporation, Kyoto-shi, Kyoto 616 (JP)
(74) Representative: Kahler, Kurt, Dipl.-Ing.
(86) International application number: JP9701904
(87) International publication number: WO9746615

(57) **Abstract**

A medium-conveying rubber member which, when used in conveying prints, such as paper money, can maintain a high abrasion resistance for a long period of time and is less likely to be stained. The carrying member is made by compounding a rubber component with a surfactant, particularly a surfactant having a polyoxyalkylene chain.

## Description

### TECHNICAL FIELD

The present invention relates to a medium transport member such as a rubber transport roller for transporting subject items (hereinafter, referred to as medium) such as, for example, paper money, tickets and cards, and more particularly concerns a medium transport member and a medium transport device having transporting properties suitable for transportation of printed media.

### BACKGROUND OF THE INVENTION

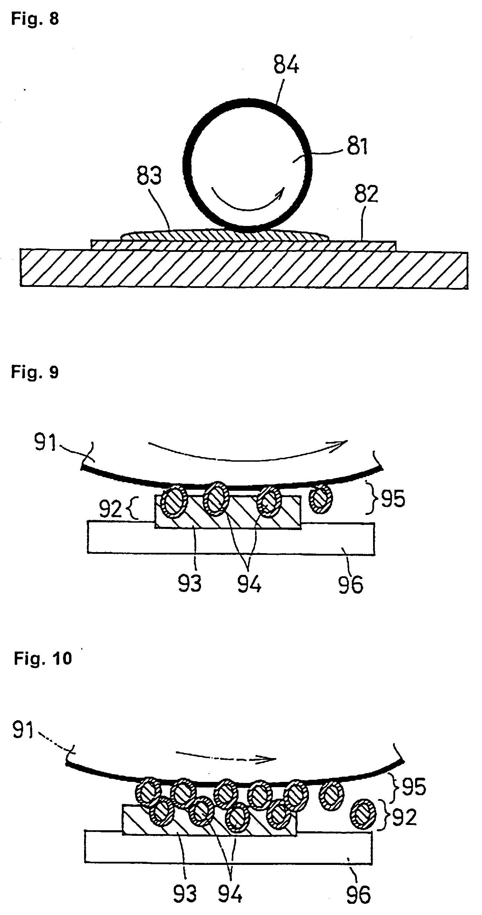

The following description will discuss the present invention by exemplifying a rubber-transport roller of a paper-money handling device that is built in an automatic teller machine. As illustrated in Fig. 8, in general, a rubber transport roller 81 of this type has a highly frictional surface which is suitable for sandwiching and transporting paper money 82, and feeds out or transports paper money by utilizing the highly frictional surface as a paper-money contact surface.

When the roller surface comes into contact with paper money, adhering matter 84 such as ink 83 printed on the paper money 82 tends to adhere to the roller surface; this causes reduction in the frictional contact force of the roller surface, and results in a sliding phenomenon, thereby degrading the feeding function and transporting function. For this reason, in order to maintain stable feeding and transporting functions, regular maintenance operations, such as cleaning, inspections and parts exchanges, are required. To solve this problem, it has been suggested to form the roller by using rubber materials having a low adhering property, such as silicone rubber and fluorine rubber, to which ink is hard to adhere; however, this case causes a great reduction in the friction coefficient, strength and abrasion resistance.

Another suggestion is that the matter adhering to the roller surface be cleaned by frictional force; however, this case causes abrasion powder to again adhere to the roller, and to serve as a lubricating material, thereby greatly lowering the friction coefficient, as well as shortening the service life, due to degradation in the roller surface. Moreover, the application of a method which makes a cleaning medium (cleaning bill) periodically pass through the machine so as to remove the matter adhering to the roller surface requires a dedicated mechanism for cleaning and cleaning bills, resulting in high costs and the need for a refilling job for cleaning bills so as to ensure high reliability, that is, the need for complex maintenance work.

Furthermore, as illustrated in FIG. 9, adhering matter 92 on the rubber transport roller 91 is mixed matter of ink 93, paper powder 94, etc., and this is formed by a mixture of pulp fibers, coloring pigments, resins, oils, etc., which have been permeated by the printing, and solidified and fixed through oxidative polymerization in a dried state. When the printed surface is subjected to a great shearing force upon coming into contact with the rubber transport roller 91, part of the printed surface containing the above-mentioned matter is separated in a powder state, and adheres to the surface of the rubber transport roller 91. As illustrated in FIG. 10, the adhering matter 92 on the rubber transport roller 91 forms a thin adhering layer 95, with the result that the frictional force between the contact surfaces of the rubber transport roller 91 and paper money 96 is lowered and the sliding phenomenon occurs upon feeding paper money or upon transporting paper money.

### DISCLOSURE OF THE INVENTION

In order to solve the above-mentioned problems, the objective of the present invention is to develop a rubber transport member whose material inherently possesses a highly frictional property and a low adhering property, the two properties suitable for the transportation for printed media, and also to provide a medium transport member and a medium transport device which can suppress a sliding phenomenon that might occur in the medium by using the transporting operation of such a rubber transport member for a long time.

### BRIEF DESCRIPTION OF THE DRAWINGS

FIG. 1 is a perspective view showing an essential part of a pickup roller when it is used in a paper-money feed device of the present invention.
FIG. 2 is a schematic side view of the paper-money feed device of the present invention.
FIG. 3 is a schematic side view of a paper-money handling device in which the paper-money feed device of the present invention.
FIG. 4 is an explanatory drawing that shows a distribution state of the concentration of a surface active agent of the present invention.
FIG. 5 is an expanded view of an essential portion that shows a contact state between paper money and the rubber transport roller of the present invention.
FIG. 6 is a graph that compares the results of feeding-out experiments carried out by using the rubber transport roller of the present invention having varied properties under low loads.
FIG. 7 is a graph that compares the results of feeding-out experiments carried out by using the rubber transport roller of the present invention having varied properties under high loads.
FIG. 8 is a schematic side view that shows a contact state of paper money and a conventional rubber transport roller.
FIG. 9 is an explanatory drawing that shows a contact state of paper money that is free from adhesion to the conventional rubber transport roller.
FIG. 10 is an explanatory drawing that shows a state in which the frictional force of the conventional rubber transport roller is lowered due to adhesion to the paper money.

### PREFERRED MODE FOR CARRYING OUT THE INVENTION

The present invention relates to a rubber transport member containing a surface active agent and a transporting device having such a transport member.

The transport member of the present invention refers to a rubber roller such as, for example, a pickup roller, a feed roller and a gate roller, or a transport member such as a belt and pad, which is used for transporting sheet materials such as paper money, tickets, cards, copied paper, printed paper and sheets of paper, or note-shaped subject materials such as a bank book.

The transporting device of the present invention refers to all kinds of devices having transport members, such as automatic teller machines for bank deposits, automatic wicket machines, copying machines, printers, printing machines, document feeders, post-card reading devices and card readers.

Referring to Figures, the following description will discuss the transport member and the transporting device of the present invention by exemplifying a paper-money feed device of an automatic teller machine; however, the present invention is not intended to be limited thereby.

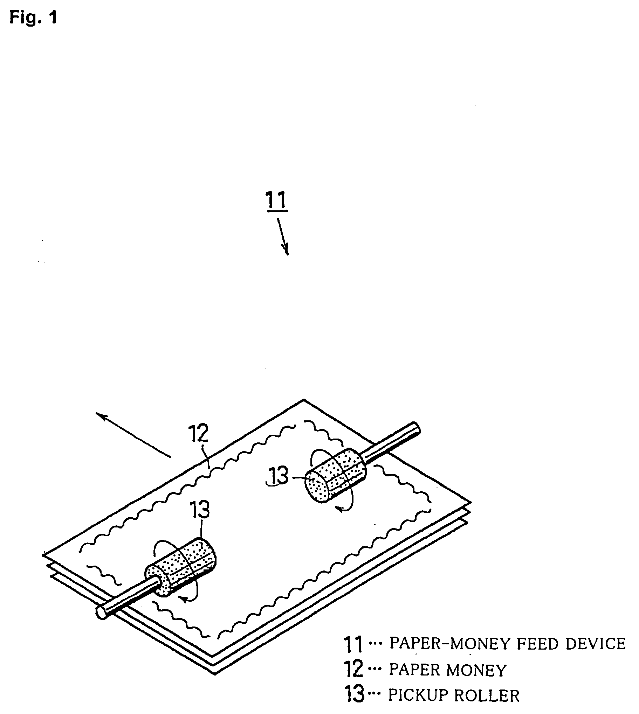

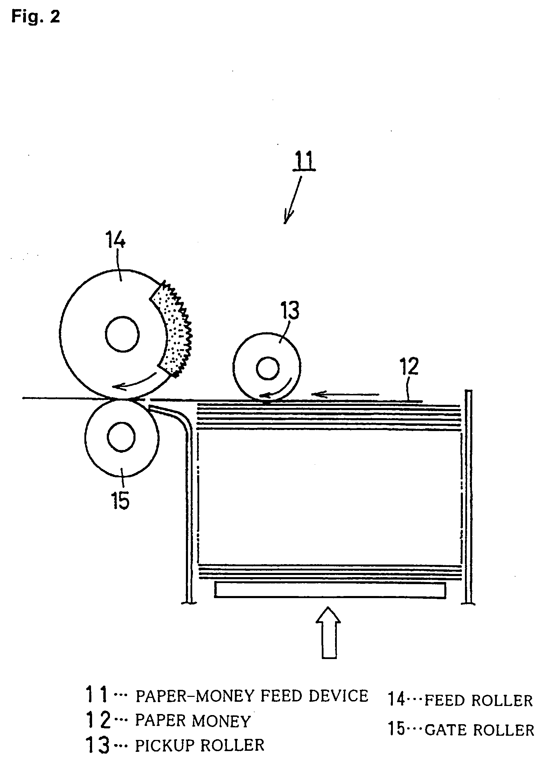

FIG. 1 and FIG. 2 show a paper-money feed device, and this paper-money feed device 11 is provided with a pair of right and left pickup rollers 13 and 13' located at feeding positions for stacked sheets of paper money 12; thus, the pair of right and left pickup rollers 13 and 13' come into contact with the upper surface of the paper money 12 and start feeding it, while a feed roller 14 and a gate roller 15, which allow for one-by-one feeding operations of the sheets of paper money 12, are placed in the feeding direction so as to feed the sheets of paper money one sheet by one sheet.

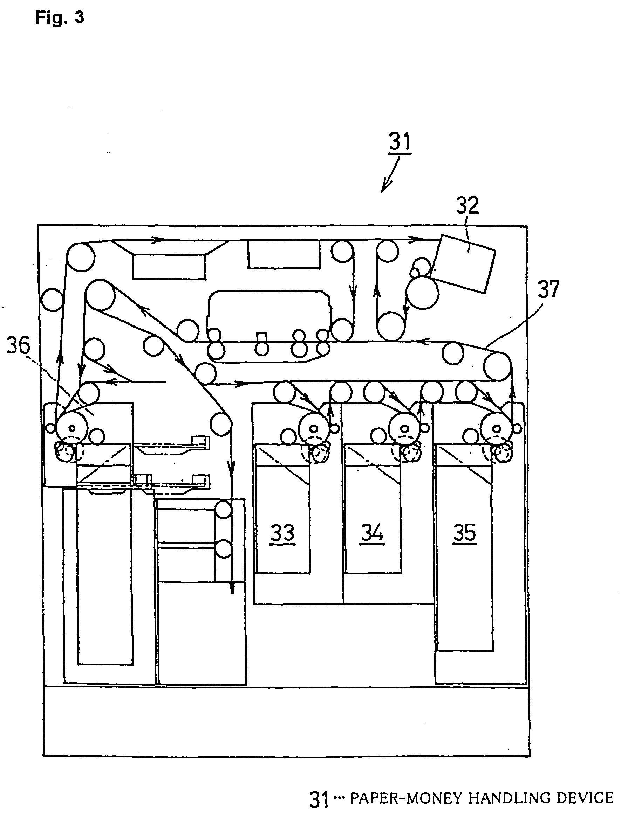

FIG. 3 shows a paper-money handling device 31 in which the paper-money feed device 11 is built, and the paper-money handling device 31 is assembled in and applied to various paper-money feeding sections such as, for example, a money deposit/draw opening 32 of an automatic teller machine (ATM), stackers 33 and 34, a cartridge 35 and a temporarily holding section 36; thus, the paper-money handling device 31 is operated so as to feed sheets of paper money one sheet by one sheet from each of these feeding positions, and these sections 32 through 36 and other handling sections are connected with one another by transport lines 37.

Meanwhile, the above-mentioned feeding-type rollers 13 through 15 installed in the paper-money feed device 11 and transporting-type rubber transport rollers installed along the transport lines 37 are made to contain a surface active agent in order to improve their roller performance.

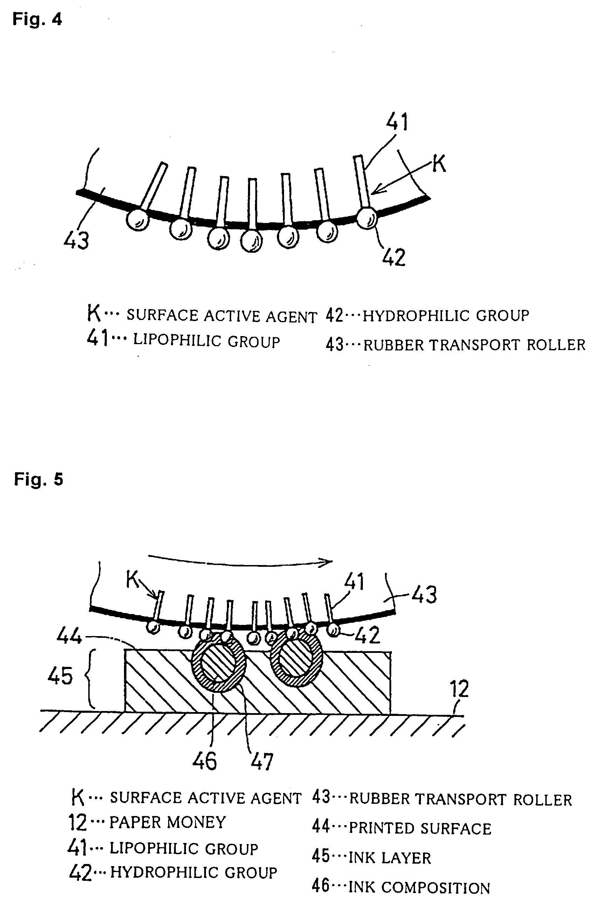

This surface active agent is designed to dissolve in water or oil so as to lower the surface energy to a great degree and also to exert original properties so as to change the various properties of the surface; therefore, as illustrated in FIG. 4, this surface active agent 48 is constituted by lipophilic groups 41 and hydrophilic groups 42, and among these, since the lipophilic groups 41 have a high affinity to rubber materials, the hydrophilic groups 42 are dispersed and aligned on the surface of the worn-out rubber transport roller 43, thereby allowing the surface of the roller to have a hydrophilic property.

Consequently, as illustrated in FIG. 5, in the case when the surface of the rubber transport roller 43 comes into contact with the printed surface 44 of paper money 12, since an ink composition (filler) 46, which is interpolated in an ink layer 45 on the printed surface 44, is changed in its property by a hydrophobic surface treatment (coupling agent) 47, and comes to have a low affinity to the hydrophilic groups 42 aligned on the surface of the rubber transport roller 43, resulting in a low adhering property; thus, this low adhering property makes it possible to prevent adhesion of the ink composition 46 to the rubber transport roller 43.

Here, paper is generally subjected to an inner filling process and/or an outer filling process (coating) as a water-proof imparting process in order to prevent blur of ink and to improve the water-proof property, and these ingredients separated from the paper have a hydrophobic property.

As described above, a lot of materials having surfaces that tend to adhere to rubber (having a hydrophobic property) exist on the surface of the medium; and in particular, many of the inner filling agents are also used as fillers of rubber, and have an extremely high affinity, with the result that they tend to adhere to the roller. However, the application of the above-mentioned means makes it possible to prevent adhesion of the filling materials and surface-improving materials contained in paper itself and paper powder made of fibers.

With respect to surface active agents applied to the present invention, either of non-ion surface active agents, negative-ion surface active agents, positive-ion surface active agents and ampholytic surface active agents may be adopted; however, those surface active agents having polyoxyalkylene chains are preferably used, and those non-ion surface active agents and positive-ion surface active agents of this type, are most preferably used.

As for non-ion surface active agents, those having a hydrophilic/lipophilic balance (HLB) of 1 to 20, especially, 7 to 20, are preferably used. When HLB is smaller than 7, the hydrophilic property reduces, with the result that the surface modification of the rubber transport roller becomes insufficient, and the adhesion-preventing effect to the ink composition and the paper composition is lowered. Moreover, if HLB is greater than 20, the hydrophilic property becomes too high, and the affinity to rubber is lowered, with the result that cracks in the rubber transport roller and bleed of the surface active agent tend to occur.

With respect to non-ion surface active agents, those having polyalkyleneoxide chains formed by polymerized alkyleneoxide are adopted, for example: adopted: adducts of ethylene oxide and adducts of propylene oxide, such as alcohols of the higher fatty family (for example, lauryl alcohol, myristyl alcohol, cetyl alcohol, stearyl alcohol, oleyl alcohol, recinoleic acid, 12-hydroxystearin acid, etc.), alkyl phenols (for example, octyl phenol, nonyl phenol, dodecyl phenol), and amids of the higher fatty family (for example, lauric amid, palmitic amid, stearic amid, oleic acid amid, etc.), amines of the higher fatty family (for example, lauryl amine, stearyl amine, oleyl amine, etc.); higher fatty acids such as polyethyleneglycolesters, for example, polyethyleneglycol lauric ester, polyethyleneglycol stearic ester, polyethyleneglycol stearic ester, polyethyleneglycol oleic ester and their diesters (for example, polyethyleneglycol distearates, alkylene oxide adducts of polyhydric alcohol fatty acid esters (for example, polyoxyethylenesorbitanmonoleate, polyoxyethylenesorbitanmonolaureate, polyoxyethylenesorbitanmonostearate, etc.), random or block copolymers of ethylene oxides and propylene oxides or their modified products (for example, polyoxyethylene-polyoxypropylene copolymer, polyoxyethylene-polyoxypropylene-monobutyl ether polyoxyethylene-polyoxypropylene-glycerin ether).

With respect to positive-ion surface active agents having polyoxyalkylene chains, alkylene oxide adducts of fatty or aromatic amines, more preferably alkylene oxide adducts of fatty amines, especially saturated or unsaturated fatty amines having carbon atoms of 12 to 24, for example, lauryl amine, stearyl amine and oleyl amine are preferably used.

With respect to alkylene oxides, ethylene oxide is typically used. With respect to propylene oxides, except for polyoxyethylene-polyoxypropylene copolymer, less amount of it is generally used as compared with ethylene oxide, even if it is used. The number of moles of ethylene oxide addition or the number of oxyethylene units of polyethyleneglycol, which varies depending on the kinds of hydrophobic groups to be added and the kinds of rubber to be blended, is normally 1 to 50 moles, more preferably 3 to 30 moles, and most preferably 5 to 20 moles.

In the present specification, the term, higher fatty acid family, refers to those compounds having saturated or unsaturated carbon chains that may include side chains, each having not less than 8 carbon atoms. In particular, in order to achieve the objective of the present invention, it is preferable to have hydrocarbon chains having 12 to 24 carbon atoms.

Besides the application of a surface active agent having 5 to 20 moles of polyoxyethylene groups in the oxyethylene unit, the application of an amid-series or amine-series surface active agent having 1 to 5 moles of polyoxyalkylene chains in the oxyethylene unit makes it possible to achieve a static eliminating effect in addition to the adhesion-preventing effect. In particular, the application of a surface active agent of an amine-series alkylene oxide addition type makes it possible to effectively suppress adhesion of ink and paper dusts.

In the present invention, negative-ion surface active agents may be adopted. With respect to the negative-ion surface active agents, the following materials are listed: alkylarylsulfonate salts, higher fatty acid salts (soap), phosphoric ester or sulfuric ester of alcohol of the higher fatty family, and phosphoric ester or sulfuric ester of the above-mentioned non-ion surface active agents. Among these, higher fatty acid salts, that is, soap, are preferably adopted. With respect to soap, alkaline-metal salts of sodium or potassium are preferably adopted.

In the present invention, other positive-ion surface active agents and ampholytic surface active agents may be blended. With respect to the positive-ion surface active agents, alkyl quaternary ammonium salt, alkylbenzyl quaternary ammonium salt, and quaternary ammonium salt containing nitrogen rings are listed. With respect to ampholytic surface active agents, betaine-type ampholytic surface active agents, glycine-type ampholytic surface active agents, alanine-type ampholytic surface active agents, sulfo-betaine-type ampholytic surface active agents are listed.

Two or more kinds of these surface active agents may be combinedly used; however, the combined use of the negative-ion surface active agent and the positive-ion surface active agent generally is not preferable.

In the present invention, esters of polyhydric hydroxy compounds and reactive monomers (hereinafter, referred to simply as reactive esters) may be used instead of a surface active agent or in combination with a surface active agent. The reactive esters may have not less than one reactive group with respect to rubber ingredients. The reactive group reacts with rubber, and is effective for preventing the hydrophilic ingredients (polyhydric hydroxy compounds) from bleeding out and becoming less effective with time. As for the reactive group, unsaturated links, which are polymerizable with unsaturated links in the rubber, are typically listed. A molecule of a compound having one reactive group is linked by rubber molecules in a pendant shape, and a molecule of a compound having not less than two reactive groups are firmly linked by rubber molecules through a cross-linking reaction. The hydrophilic groups are aligned outside, thereby making it possible to provide a superior anti-adhesion effect with durability. More specifically, these include esters between carboxylic acids having α,β-ethylene-type double bonds such as (metha)acrylic acid and maleic acid, and polyhydric alcohols such as, for example, polyalkyleneglycol, sorbitan, glycerin and pentaerythritol, and more preferably, mono or diesters of (metha)acrylic acids and polyetyleneglycol.

Preferable surface active agents are (1) adducts of alkyleneoxides of fatty or aromatic amines (for example, polyoxyethylenealkylamine); (2) adducts of alkyleneoxides of fatty alcohol or alkylphenol (for example, polyoxyethylenenonylphenolether, polyoxyethylenelaurylether); (3) polyoxyethylene-polyoxypropylene copolymer (for example, polyoxyethylene-polyoxypropylenemonobutylether); (4) alkylesters of adducts of polyhydric alcohol (for example, polyoxyethylenesorbitanmonostearate); (5) polyethyleneglycoldicarboxylic ester (for example, polyethyleneglycoldistearate). In particular, (1) is more preferable. With respect to reactive esters, polymerizable unsaturated carboxylic esters of polyethyleneglycol (for example, polyoxyethylene mono or di(metha)crylate) are listed.

In order to achieve the objective of the present invention, polymers having hydrophilic groups may be added to the above-mentioned surface active agents as other ingredients. These polymers may be completely water soluble at normal temperature, or may be dispersed in water in a cloudy state. Specifically, these include polymers having (metha)acrylate groups, for example, copolymers of acrylate, modified polymers of acrylate (starch-acrylate graft polymers, etc.), cellulose derivatives (carboxymethyl cellulose, hydroxyethyl cellulose, methylcellulose, hydroxypropylmethyl cellulose, etc.) and polyvinyl alcohol.

In order to blend the surface active agents, the above-mentioned surface active agents, etc., as well as other predetermined ingredients, are added to rubber ingredients that have been softened at high temperature, and are kneaded by a kneader, a roller kneader, etc. until they are uniformly dispersed. The blended rubber is molded into a predetermined shape, and then cured on demand. The rubber roller, obtained in this manner, maintains its low adhering property even after its surface has been worn out, because the surface active agent is always exposed to the roller surface.

The content of the surface active agent is set at 0.1 to 10 % by weight of the total ingredients forming the roller, and more preferably at 0.5 to 5 % by weight. The anti-adhering effect of the composition increases in proportion to the ratio of the content; and the content of less than 0.1 % by weight fails to obtain a sufficient anti-adhering effect, and the content exceeding 10 % by weight allows the surface active agent to ooze out to the surface of the rubber due to excessive content beyond the limit. Moreover, this range of content allows the dispersing layer of the hydrophilic groups on the roller surface to have a thickness suitable for maintaining an optimum frictional force.

Moreover, the kinds of the hydrophilic groups are selected based upon the applied materials of rubber transport rollers, and in order to prevent degradation in performance due to bleeding out, those which react with the rubber materials and undergo crosslinking reactions are suitably used.

In addition to polymers having the above-mentioned surface reactive agents and hydrophilic groups, the rubber compound used for rubber transport rollers of the present invention may contain, on demand, other ingredients that are normally blended in rubber transport rollers, such as, for example, fillers (carbon black, white carbon, calcium carbonate, etc.), curing agents (for example, sulfur, organic peroxides, etc.), curing accelerators, coloring agents, antioxidants, etc.

Although not especially limited, rubbers that are applicable to the present invention with remarkable effects are those rubbers having comparatively low hardness, for example, (1) ethylenepropylenediene rubber (2) polynorbornene rubber and (3) chlorinated polyethylene rubber. These rubbers are particularly suitable for pickup rollers, feed rollers and transport rollers. In this case, the rubber hardness is preferably set in the range of 15° - 75°.

For gate rollers which require higher dimensional precision and abrasion resistance, those having higher hardness are also applied. For this purpose, urethane rollers are suitable. In this case, the hardness is preferably set in the range of 40° - 90°.

In accordance with the present invention, the rubber transport member in which the surface active agents are contained is provided with both highly frictional property and low adhering property; thus, the rubber transport member desirably comes into contact with the medium and transports the medium.

In the same manner, upon carrying the medium, the rubber transport rollers in which the surface active agents are contained are used for sandwiching and transporting the medium.

Moreover, the rubber transport member and the rubber transport rollers are designed to contain 0.1 to 10 % by weight of the surface active agents with respect to the total amount of the ingredients of the rubber transport member.

A medium transport device, which is designed to include these medium transport members, is used for transporting the medium.

Consequently, when the rubber transport member comes into contact with the printed surface of the medium, the surface active agents of the rubber transport member are kept in contact with the printed surface while exerting the low adhering property; thus, the rubber transport member is allowed to contact the medium while maintaining a highly frictional surface with less adhesion of ink. Therefore, the rubber transport member is allowed to have stable feeding and transporting performances while sufficiently restricting the sliding phenomenon. Moreover, when the rubber transport member is provided as a rubber transport roller, it is applied to a wide range of usage, and it becomes possible to maintain the abrasion resistance of the roller itself for a long time and consequently to ensure long life of the roller.

The medium transport member of this type is applied to a medium transport device, and the medium transport device is widely applied to various transaction-processing apparatuses by being assembled therein; thus, it becomes possible to improve the reliability and performances of the apparatuses.

The following description will discuss the present invention by means of embodiments.

### Embodiment

### Embodiment 1

### Production of rubber transport roller

Ethylenepropylenediene rubber was heated and melted, and to this was blended 2 % by weight of the following surface active agents with respect to the rubber ingredients, and this was sufficiently kneaded. This kneaded matter was pressed and extended, and rolled around a core for a feed roller of a paper-money feed device, and this was heated and cured, thereby providing a feed roller.

### Surface active agents blended

a) polyoxyethylene tallow amine
b) polyethyleneglycolmonoacrylate
c) polyoxyethylenenonylphenyl ether
d) polyethyleneglycolmonomethacrylate
e) polyethyleneglycoldimethacrylate
f) no addition

### Evaluation tests for slide rate

### Evaluation tests for sliding with low load:

In accordance with the method described in papers (IV) for the Seminar in the 72nd Regular Meeting in the Japan Machinery Society (written by Yoriaki Omata, March 1995), the slide rate was evaluated under the following conditions: Roller diameter ⌀ 22 mm, Roller pressure 4 N, Load 2 N, Roller width 15 mm, Roller number of revolutions 1200 rpm.

### Evaluation tests for sliding with high load:

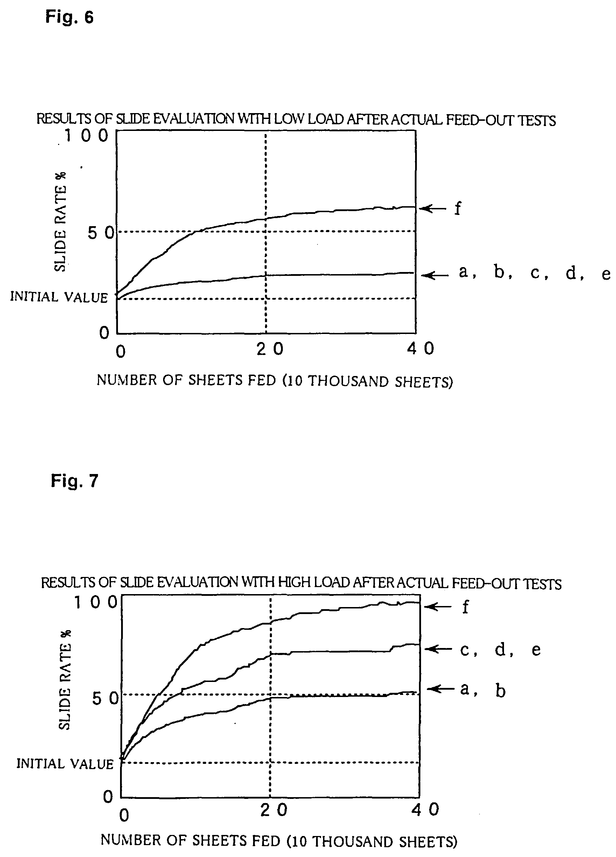

Evaluation was made in the same maker as the evaluation tests for sliding with low load except that the load was changed to 4 N. The results obtained are shown in FIG. 6 (RESULTS OF SLIDE EVALUATION WITH LOW LOAD) and FIG. 7 (RESULTS OF SLIDE EVALUATION WITH HIGH LOAD).

FIG. 6 shows that the slide rate increases in proportion to the number of sheets fed out in the case of rubber transport rollers without containing surface active agents, thereby reducing the feeding performance. In contrast, in the case of rubber transport rollers containing the surface active agents, although the slide rate increases up to the number of sheets of approximately 70,000, it reaches an approximately balanced state when the number exceeds 70,000 sheets, thereby making the increase of the slide rate moderate. Even after 400,000 sheets have been fed out, the slide rate does not increase so much, indicating that a stable anti-adhering effect is obtained for a long time. In other words, it is possible to obtain long life of the rubber transport roller.

In FIG. 7 also, the same results are confirmed.

## Claims

1. A rubber transport member containing a surface active agent and/or an ester of polyhydric hydroxy compound and a reactive monomer.

2. The rubber transport member according to claim 1, wherein said surface active agent is a surface active agent having a polyoxyalkylene chain.

3. The rubber transport member according to claim 1, wherein said surface active agent is polyoxyethylene fatty amine or polyoxyethylene aromatic amine.

4. The rubber transport member according to claim 1, wherein said surface active agent is polyoxyethylenealkylphenyl ether.

5. The rubber transport member according to claim 1, wherein said ester of a polyhydric hydroxy compound and a reactive monomer is polyethyleneglycol or di(metha)acrylate.

6. The rubber transport member according to claim 1, wherein said surface active agent is set in a range of 0.1 to 10 % by weight with respect to the total amount of ingredients of the rubber transport member.

7. The rubber transport member according to claim 1, wherein said rubber is selected from the group consisting of ethylenepropylenediene rubber, polynorbornene rubber and chlorinated polyethylene rubber.

8. A rubber transport member containing polymers having a surface active agent and a hydrophilic group.

9. The rubber transport member according to claim 8, wherein said polymers having a hydrophilic group are polymers selected from the group consisting of acrylate copolymer, cellulose derivatives and polyvinylalcohol.

10. The rubber transport member according to claim 8, wherein said polymers having a hydrophilic group is set in a range of 0.1 to 10 % by weight with respect to the total amount of ingredients of the rubber transport member.

11. The rubber transport member according to any one of claims 1 through 10, wherein said transport roller is a pickup roller, feed roller or gate roller, or a belt or a pad.

12. A medium transport device comprising said rubber transport member as disclosed in any one of claims 1 through 10.

13. The medium transport device according to claim 12, wherein said medium transport device is selected from the group consisting of: a paper-money feeding device for an automatic teller machine, a copying machine, a printer, a printing machine, a document feeder, a post-card reader, and a card reader.
